# EUROPEAN PATENT APPLICATION

(11) **EP 3 141 742 A1**
(43) Date of publication of application: **15.03.2017**
(21) Application number: 14891188.6
(22) Date of filing: 30.05.2014
(51) Int. Cl.: F03D 1/06, F03D 3/06

(54) **WIND BLADE FOR WIND TURBINE**

(30) Priority: 06.05.2014 CN 201410189326
(71) Applicant: Shenzhen Bangzhong Wind Power Generation Technology Co. Ltd., Longhua New District Shenzhen Guangdong 518000 (CN)
(72) Inventor: GENG, Zhiwei, Shenzhen Guangdong 518000 (CN); GENG, Bangzhong, Shenzhen Guangdong 518000 (CN)
(74) Representative: Sun, Yiming
(86) International application number: PCT/CN2014/078964
(87) International publication number: WO 2015/168971

(57) **Abstract**

A wind blade for a wind turbine, comprising: a curved panel (1), the middle portion of which forms a concave structure, a side of said panel (1) being provided with a resistance portion (12), and the side of said panel (1) having the resistance portion (12) being provided with a plurality of jet stream holes (6); a cover plate (2) fixedly connected to the edge of the curved panel (1) and partially covering the concave structure in the middle portion of the curved panel (1); and, a connection member (5) for mounting the blade on a central rotating device. Said wind blade is structurally simple, and is well-adapted for safe operation and power generation at both high and low wind speeds.

## Description

### FIELD OF THE INVENTION

The present invention relates to wind power technology, and more particularly to a wind blade for a wind turbine.

### BACKGROUND OF THE INVENTION

In recent years, the global warmer weather is melting glaciers and the environment worsens day by day. The people of the whole world pay more and more attention on energy conservation and emissions reduction and it is urgent to make a sustainable development strategy including developing new energy and protecting the ecological environment. Especially in China, under the guidance of the philosophy that keep economic development as the central task, the rapid development of economy depends mostly on the consumption of abundant natural resources, thereby causing the environment even worsen.

In order to solve the existing environmental problems, developing new energy is a task which brooks no delay. The new energy refers to any energy except traditional energy. At present, there are four kinds of new energy have advanced enough and have been used massively, which includes solar power, wind power, marsh gas and fuel cell. Under the circumstance of lack of energy, new energy power generation will become mainstream technology in the field of power generation.

The application of wind power receives more and more attention, especially in three-north areas and coastal areas of China, where there has abundant wind energy resource, thus wind-power development is a preferable solution to solve the energy problems. However, on the current situation, the utilization ratio of the wind power is not high and the range of available wind speeds is too narrow, thus the further developments of the wind power is limited. At present, the existing wind turbine generally has following defects:
1. The existing wind energy generator is very hard to be started up when the wind speed is low, thereby huge amounts of energy is wasted and the application range of the wind energy generator is limited.
2. If the wind speed exceeds a certain value, the existing wind energy generator needs to bear enormous loads so that the wind blades thereof will be damaged due to the restrictions of its own structure. As a result, the wind resources with high wind speed will be wasted and the life of the wind energy generator will be reduced and the maintenance cost will be relatively high.
   There are two ways to solve the above problems as follows: one is to brake in electronic format by means of short circuit and the other one is to brake by means of friction plate. However, both of the two above methods have defects. The former will produce very high impulse current instantaneously, thus the wind energy generator is easy to be damaged. The latter will cause the friction plate to be worn and then the wind blades will be destroyed easily when facing heavy wind. In order to solve the above problem, it needs to change the friction plate frequently which will bring higher maintenance cost and lower economic benefit.
3. At present, the common wind turbine generally brakes or stops to run directly when facing heavy wind, as a result, it wastes huge amounts of energy.

At present, an electric power-generating equipment including both of a high-speed blower and a low-speed blower is generally used to solve the problem that the existing wind turbine is not compatible with high and low wind speeds. For example, a Chinese Patent, the application number of which is 201120489391.X, has disclosed a wind blade for an adjustable blower, which consists of a blade and a blisk. The blade consists of a blade body and a blade root. The wind outlet surface of the blade body is covered with spherical recesses. The blade root is a cylindrical structure and the middle portion of the cylindrical structure is provided with a circular limiting slot. The exposed end of the blade root is provided with index marks for showing the angle adjustment of the blade body. The cylindrical surface of the blade root is provided with an antiskid slot. The blade body and the blade root are connected as a whole. The blisk consists of an upper blisk and a lower blisk assembled together. The upper blisk has the same structure as the lower blisk. The connection between the upper blisk and the lower blisk is provided with multiple connecting holes for mounting the blade root of the wind blade. The middle portion of the blisk is provided with a shaft hole. The upper blisk is fixed to the lower blisk by means of fixing holes and screws. It has advantages of wind concentrated and low noise due to the spherical recesses provided on the wind outlet surface of the blade body; it has excellent corrosion resistance capability and light weight due to the use of resin materials; it is convenient for accurate adjustment of the angles between the blades due to the index marks provided on the exposed end of the blade root; the antiskid slot provided on the cylindrical surface of the blade root is to enable the blade to be fixed more firmly and stably. The recesses provided on the blade can increase the utilization ratio of wind power in low wind speeds, thereby enabling the wind turbine to be started up. However, this type of wind blade cannot be used to wind turbine to achieve effective use of wind power in high wind speeds.

### SUMMARY OF THE INVENTION

The technical problem to be solved is to overcome the above defects of the prior art by providing a wind blade for a wind turbine, which can achieve efficient use of wind energy both at low wind speed and at high wind speed, by means of the improvement of the structure of the wind blades and the reasonable use of aerodynamics.

To solve the above problem, there are provided following technical solutions:
A wind blade for a wind turbine comprises: a curved panel, a middle portion of which forms a concave structure, a side of the curved panel being provided with a resistance portion and the side of the curved panel having the resistance portion being provided with a plurality of jet stream holes; a cover plate fixedly connected to an edge of the curved panel so as to form a wind inlet together with the curved panel; and a connection member provided for mounting the wind blade on a central rotating device.

The wind blade for wind turbine further comprises a central shaft fixed to the cover plate and multiple supporting members, an end of the supporting member being fixed to the central shaft and another end thereof being fixed to the curved panel.

Wherein, the curved panel is symmetrical about a longitudinal center line thereof.

Wherein, the cover plate and the resistance portion are arranged on a same side of the curved panel.

Preferably, the resistance portion is a cambered surface.

Preferably, both of the curved panel and the cover plate are a plate-type structure which is formed by fiberglass layers and epoxy resin layers overlaid with each other.

Wherein, the connection member comprises a connecting rod and a mounting plate.

Preferably, the central shaft is a conical rod or tube which is small at a top and big at a bottom.

Wherein, the connection member is fixed to an end of the central shaft with a bigger radius.

Wherein, multiple sets of the jet stream holes are evenly provided on the curved panel along a longitudinal direction and each set consists of two jet stream holes.

Compared with the prior art, the present invention has following beneficial effects: the wind blade for a wind turbine of the present invention could be adapted for wind power equipment compatible with high and low wind speeds; by means of the wind blade of the present invention, the wind turbine can be started up to generate power quickly when the wind speed is low, and it can realize a balance control when the wind speed is high, thereby avoiding damage to the wind blade. It has simple structure, high strength structure, low cost and has extensive expansion apply foreground.

### BRIEF DESCRIPTION OF THE DRAWINGS

FIG. 1 is a perspective view of the wind blade for a wind turbine according to an embodiment of the present invention;
FIG. 2 is a front view of the wind blade for a wind turbine according to an embodiment of the present invention;
FIG. 3 is a side view of the wind blade of the wind blade for a wind turbine according to an embodiment of the present invention;
FIG. 4 is a bottom view of the wind blade for a wind turbine according to an embodiment of the present invention; and
FIG. 5 is a cross sectional view of the wind blade for a wind turbine according to an embodiment of the present invention.

### Description of the reference number in the figures:

Curved panel 1; curved panel body 11; resistance portion 12; cover plate 2; wind inlet 21; central shaft 3; supporting member 4; connection member 5; connecting rod 51; mounting plate 52; mounting hole 521; jet stream hole 6.

### DETAILED DESCRIPTION OF ILLUSTRATED EMBODIMENTS

For understanding the technical content of the present invention more sufficiently, some embodiments of the present invention will be described as follows, by way of example only, with reference to the accompanying drawings.

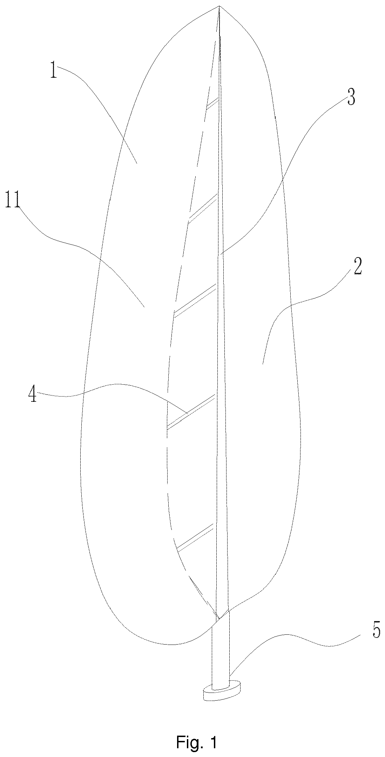

Referring to FIG. 1 to FIG. 3, the wind blade for a wind turbine includes a curved panel 1 which is provided with a concave structure formed on a middle portion thereof, a cover plate 2 which partly covers the concave structure of the curved panel 1 along the edge of the curved panel 1, a central shaft 3 fixed to the cover plate 2, several supporting members 14 which has an end fixed to the central shaft 3 and another end fixed to the curved panel 1, a connection member 5 connecting to an end of the central shaft 3 and a plurality of jet stream holes 6 provided on the curved panel 1 which is covered by the the cover plate 2.

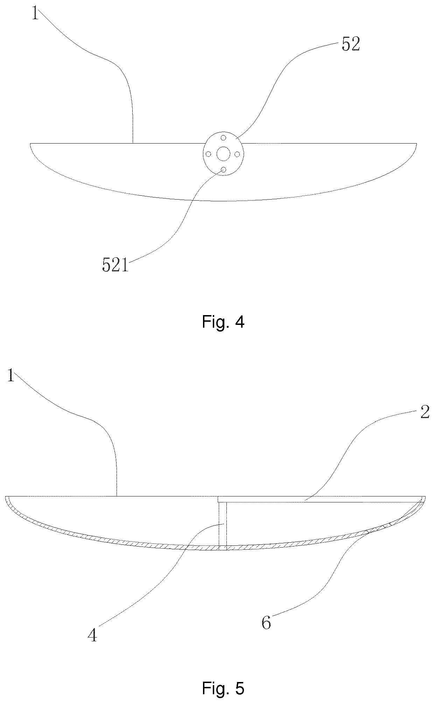

Referring to FIG. 1, FIG. 3 and FIG. 5, the curved panel 1 includes a curved panel body 11 and a resistance portion 12. The curved panel body 11 has a larger dimension in longitudinal direction than that in transverse direction (it should be noted that the longitudinal direction refers to the direction of the length and the transverse direction refers to the direction of width) and it is symmetrical about its longitudinal center line. The resistance portion 12 is a cambered surface and is located on right side of the curved panel 1. The jet stream holes 6 are located around or on the resistance portion 12. In this embodiment, the curved panel 1 is a leaf shaped structure.

The curved panel body 11 is made of the materials having good performance of anti-solarization, anti-aging and high tenacity. In this embodiment, the curved panel body 11 is formed by fiberglass layers and epoxy resin layers overlaid with each other in sequence.

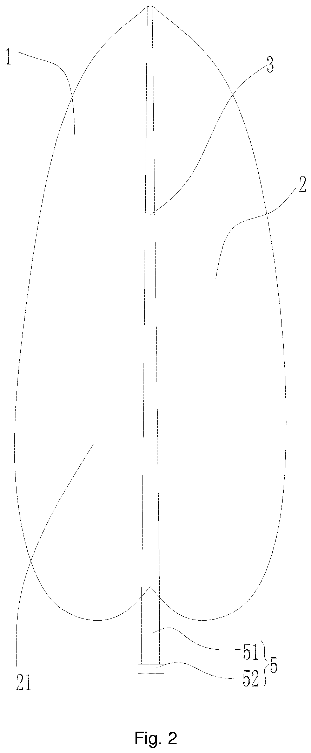

Referring to FIG. 1 and FIG. 2, the curved edge of the cover plate 2 has the same shape as that of the edge of the curved panel 1. The curved edge of the cover plate 2 is connected to the edge of the curved panel 1 fixedly and hermetically. The cover plate 2 includes a straight edge which is parallel to the longitudinal center line of the curved panel 1. The cover plate 2 and the curved panel 1 provide a cavity together and the cover plate 2 partly covers the cavity of the curved panel 1. There is a wind inlet 21 formed between the cover plate 2 and the curved panel 1 for allowing natural wind to enter into the wind blade and then drive the wind blade to rotate.

The cover plate 2 is made of the materials having good performance of anti-solarization, anti-aging and high tenacity. In this embodiment, the cover plate 2 is formed by fiberglass layers and epoxy resin layers overlaid with each other.

Referring to FIG. 1, the central shaft 3 is a rod or tube made of the materials with high strength and high tenacity. The central shaft 3 is a conical structure which has a radius getting large from an upper end to a lower end thereof, that is, it is a conical structure which is small at a top and big at a bottom. The central shaft 3 is fixed to the cover plate 2 so as to enhance the structural strength of the wind blade. The central shaft 3 is designed to be conical structure so as to reduce the centrifugal force when the wind blade is rotating at high speed and enhance tension intensity of the central shaft 3.

Referring to FIG. 1, one end of the supporting member 4 is fixed to the central shaft 3 and the other end thereof is fixed to the curved panel body 11. The supporting member 4 could be multiple supporting rods, which are evenly arranged on and fixed to the central shaft 3, and also could be multiple supporting plates 14. The supporting member 4 is provided to enhance the structural strength of the wind blade and then enhance the wind-resistant performance thereof, and increase the force bearing area when the wind speed is low, thereby improving the utilization ratio of wind power.

Referring to FIG. 1, FIG. 2 and FIG. 4, the connection member 5 includes a connecting rod 51 and a mounting plate 52. The connecting rod 51 has an end fixedly connecting with the end of the central shaft 3 and another end fixedly connecting with the mounting plate 52. There are multiple mounting hole 521 formed on the mounting plate 52 symmetrically. The connection member 5 is used to install the curved panel 1 onto a central rotating device of a wind turbine.

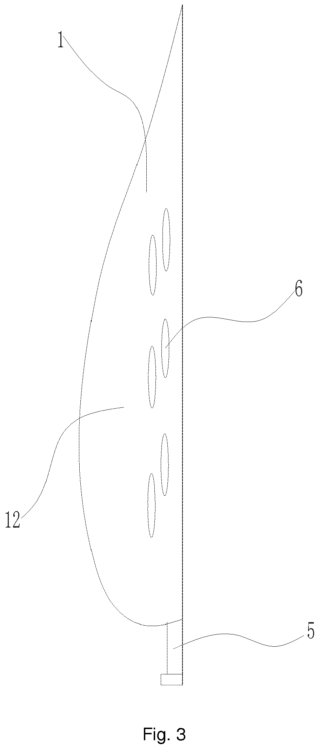

Referring to FIG. 3, the jet stream holes 16 are elliptic or rounded through-holes formed on the resistance portion 12. In this embodiment, two or multiple sets of jet stream holes16 are evenly provided on the resistance portion 12 and each set consists of two jet stream holes 16.

In other embodiments, the curved panel 1 could be peach shaped or banana leaf shaped, and it also could be semi-cylinder shaped or semi-cone shaped. Preferably, the curved panel 1 is a leaf shaped panel which has arc-shaped edges and the width of upper part thereof is smaller than that of the lower part thereof.

Above descriptions of embodiments are provided for further illustrating the technical content of the present invention, so as to facilitate understanding and it should be understood that the invention is not to be limited to the disclosed embodiments. Any technique extension and recreation according to the present invention should be included within the scope of protection of the invention.

## Claims

1. A wind blade for a wind turbine, comprising:
a curved panel, a middle portion of which forms a concave structure, a side of the curved panel being provided with a resistance portion and the side of the curved panel having the resistance portion being provided with a plurality of jet stream holes;
a cover plate fixedly connected to an edge of the curved panel so as to form a wind inlet together with the curved panel; and
a connection member provided for mounting the wind blade on a central rotating device.

2. The wind blade for a wind turbine according to claim 1, wherein the wind blade further comprises a central shaft fixed to the cover plate and multiple supporting members, an end of the supporting member being fixed to the central shaft and another end thereof being fixed to the curved panel.

3. The wind blade for a wind turbine according to claim 1, wherein the curved panel is symmetrical about a longitudinal center line thereof.

4. The wind blade for a wind turbine according to claim 1, wherein the cover plate and the resistance portion are arranged on a same side of the curved panel.

5. The wind blade for a wind turbine according to claim 1, wherein the resistance portion is a cambered surface.

6. The wind blade for a wind turbine according to of claim 1, wherein both of the curved panel and the cover plate are a plate-type structure which is formed by fiberglass layers and epoxy resin layers overlaid with each other.

7. The wind blade for a wind turbine according to of claim 2, wherein the connection member comprises a connecting rod and a mounting plate.

8. The wind blade for a wind turbine according to of claim 2, wherein the central shaft is a conical rod or tube which is small at a top and big at a bottom.

9. The wind blade for a wind turbine according to of claim 1, wherein the connection member is fixed to an end of the central shaft with a bigger radius.

10. The wind blade for a wind turbine according to of claim 1, wherein multiple sets of the jet stream holes are evenly provided on the curved panel along a longitudinal direction and each set consists of two jet stream holes.
